# NEUE EUROPÄISCHE PATENTSCHRIFT

(11) **EP 3 351 830 B2**
(45) Veröffentlichungstag und Bekanntmachung des Hinweises auf die Entscheidung über den Einspruch: **15.03.2023**
(45) Hinweis auf die Patenterteilung: 31.07.2019
(21) Anmeldenummer: 17152660.1
(22) Anmeldetag: 23.01.2017
(51) Int. Cl.: F16H 57/08, F03D 80/70, F16H 3/64, F03D 15/10, F16H 1/46

(54) **PLANETENGETRIEBE MIT VERBESSERTER PLANETENTRÄGERLAGERUNG**
PLANETARY TRANSMISSION WITH IMPROVED PLANET CARRIER BEARING
ENGRENAGE PLANÉTAIRE COMPRENANT UN PALIER DE PORTE-SATELLITES AMÉLIORÉ

(43) Veröffentlichungstag der Anmeldung: 25.07.2018
(73) Patentinhaber: Flender GmbH, 46395 Bocholt (DE)
(72) Erfinder: Klein-Hitpass, Arno, 52074 Aachen (DE)
(74) Vertreter: Michalski Hüttermann & Partner Patentanwälte mbB

(56) Entgegenhaltungen:
- EP-A1- 2 078 855
- EP-A1- 2 284 420
- EP-A1- 2 284 428
- EP-A1- 2 554 839
- WO-A1-2011/127509
- WO-A2-03/031811
- US-A- 3 381 546
- US-A- 3 513 724

## Beschreibung

Die Erfindung betrifft ein Planetengetriebe, das u.a. für die Verwendung in einer Windenergieanlage ausgelegt ist.

Die Erfindung betrifft auch einen Antriebsstrang für eine Windenergieanlage, der mit dem erfindungsgemäßen Planetengetriebe ausgestattet ist. Ferner betrifft die Erfindung eine Windenergieanlage, die über einen erfindungsgemäßen Antriebsstrang verfügt.

Aus dem Dokument EP 2 284 420 A1 ist ein mehrstufiges Planetengetriebe für eine Windenergieanlage bekannt, die über zwei Planetenträger verfügt. Ein erster Planetenträger ist dabei beidseitig in Lagern drehbar aufgenommen, die jeweils in einer Wandung des Gehäuses aufgenommen sind. Der erste Planetenträger wirkt über eine Sonnenwelle mit einem zweiten Planetenträger zusammen, der abtriebsseitig, also einseitig, gelagert ist, wobei das Lager in der Wandung des Gehäuses aufgenommen ist.

Ein wesentlicher Nachteil von bekannten Planetengetrieben besteht darin, dass diese eine hohe Anzahl an Bauteilen aufweisen. Darüber hinaus werden in bekannten Planetengetrieben Lager eingesetzt, die aufwändig einzustellen und kostenintensiv sind. Es besteht Bedarf an einem leistungsfähigen Planetengetriebe, das schnell und einfach zu montieren ist, mit einem Minimum an Bauteilen auskommt und somit wartungsfreundlich und kosteneffizient ist. Insbesondere besteht Bedarf an einem Planetengetriebe, das einen hohen Grad an Modularität aufweist.

Die Aufgabenstellung wird durch das erfindungsgemäße Planetengetriebe mit den Merkmalen der unabhängigen Ansprüche gelöst. Das Planetengetriebe weist eine erste und eine zweite Getriebestufe auf, die unmittelbar hintereinander angeordnet sind und mechanisch miteinander gekoppelt sind. Das Planetengetriebe umfasst auch ein Gehäuse, das in Differentialbauweise durch äußere Wandungen der ersten und zweiten Getriebestufe und/oder die jeweiligen Hohlräder der ersten und zweiten Getriebestufe ausgebildet ist. Das Gehäuse weist eine Öffnung auf, durch die sich eine erste Welle erstreckt, die in der ersten Getriebestufe drehmomentübertragend unmittelbar mit einem ersten Planetenträger verbunden ist. Die erste Welle kann dabei auch einstückig mit dem ersten Planetenträger ausgebildet sein. Die erste Welle ist drehbar in einem Lager aufgenommen, das im Bereich der Öffnung an einer Wandung des Gehäuses angebracht ist. Das Lager für die erste Welle ist dazu ausgebildet, Axialkräfte und Radialkräfte aufzunehmen. Eine Drehung der ersten Welle ruft somit eine Drehung des ersten Planetenträgers um eine gemeinsame Drehachse hervor. Hierdurch ist der erste Planetenträger einseitig gelagert. Im ersten Planetenträger ist auch eine erste Sonnenwelle aufgenommen, die dazu ausgebildet ist, Wellenleistung von der ersten Getriebestufe in die zweite Getriebestufe zu übertragen. Die erste Sonnenwelle ist hierzu drehmomentübertragend mit einem zweiten Planetenträger in der zweiten Getriebestufe verbunden. Die zweite Getriebestufe weist mindestens ein zweites Planetenrad und eine zweite Sonnenwelle auf.

Erfindungsgemäß ist der zweite Planetenträger in einem axial inneren Lager um eine Drehachse drehbar aufgenommen. Das axial innere Lager ist dabei unmittelbar am ersten Planetenträger angeordnet. Hierdurch ist eine relative Drehung zwischen dem ersten und zweiten Planetenträger während des Betriebs des Planetengetriebes möglich. Alternativ oder ergänzend ist der zweite Planetenträger in einem axial äußeren Lager aufgenommen, das an einem dem ersten Planetenträger abgewandten Ende des Gehäuses in dessen Wandung aufgenommen ist. Das axial innere Lager und/oder das axial äußere Lager sind dabei vorzugsweise jeweils dazu ausgebildet, vorrangig eine Axialbelastung aufzunehmen. Hierunter ist zu verstehen, dass die Belastbarkeit des axial inneren bzw. axial äußeren Lagers in Axialrichtung die Belastbarkeit in Radialrichtung erheblich übersteigt.

Die Lagerung der ersten und zweiten Getriebestufe im erfindungsgemäßen Planetengetriebe erlaubt eine gute selbsttätige Zentrierung der Planetenträger, der zugehörigen Planetenräder und der jeweiligen Sonnenwelle bei einem Minimum an eingesetzten Lagern. Insbesondere kann eine präzise und belastbare Lagerung der beiden Planetenträger mit bereits zwei Lagern erzielt werden. Ferner bietet die Lagerung der Planetenträger dem erfindungsgemäßen Planetengetriebe die Möglichkeit, das Planetengetriebe im Wesentlichen modular auszubilden. Hierdurch sind die Getriebestufen separat herstellbar und erlauben eine einfache Endmontage des beanspruchten Planetengetriebes. Bei der Verwendung in einer Windenergieanlage ist das erfindungsgemäße Planetengetriebe in seine erste und zweite Getriebestufe geteilt transportierbar und in einfacher Weise erst am Einsatzort zu montieren. Hierdurch wird ein hohes Maß an Flexibilität bei der Endmontage des erfindungsgemäßen Planetengetriebes und der zugehörigen Anwendungen erreicht.

In einer bevorzugten Ausführungsform der Erfindung ist das Lager, in dem die erste Welle aufgenommen ist, das axial innere Lager, und/oder das axial äußere Lager jeweils als Gleitlager oder als Wälzlager ausgebildet. Besonders bevorzugt ist ein Wälzlager, wenn dieses als Kegelrollenlager, Pendelrollenlager, Tonnenrollenlager, Kreuzrollenlager, als Nadelrollenlager, als Zylinderrollenlager, Rillenkugellager, Schrägkugellager, Vierpunktlager, Kugelrollenlager, Axial-Radialzylinderrollenlager, Axialrillenkugellager, Axialschrägkugellager, Axialzylinderrollenlageroder als eine Kombination dieser Lager ausgebildet ist. Derartige Lager bieten ein hohes Maß an Belastbarkeit gegen Axial- und Radialbeanspruchungen und ein hohes Maß an Zuverlässigkeit. Besonders bevorzugt ist ein Gleitlager, das als Radiallager ausgebildet ist, insbesondere als Kreiszylinderlager, Mehrflächenlager mit Kippsegmenten, als Zweikeillager, auch Zitronenlager genannt, als Mehrflächengleitlager oder als Schwimmbuchsenlager. Weiter bevorzugt ist ein Gleitlager, das als Axiallager ausgebildet ist, insbesondere als Lager mit eingearbeiteten Keilflächen oder als Lager mit kippbeweglichen Lagersegmenten. Bei der Verwendung von Gleitlagern wird ein hohes Maß an Zuverlässigkeit und ein niedriger erforderlicher Wartungsaufwand erzielt. Die erfindungsgemäße Lösung erlaubt damit, auf besonders einfache Lagertypen zurückzugreifen.

Besonders bevorzugt sind das Lager der ersten Welle, das axial innere Lager und/oder das axial äußere Lager jeweils als Kegelrollenlager ausgebildet. Dabei ist mindestens eines der Kegelrollenlager in einem vormontierten Zustand der ersten und/oder zweiten Getriebestufe vorgespannt. Unter einem vormontierten Zustand ist dabei ein Zustand zu verstehen, in dem die erste und/oder zweite Getriebestufe jeweils separat bereits montiert ist, jedoch noch zum angestrebten Planetengetriebe zusammenzufügen sind.

Die erfindungsgemäße Lösung erlaubt es, die Kegelrollenlager in der ersten und/oder zweiten Getriebestufe separat vorzuspannen und damit einzustellen. Die erste und zweite Getriebestufe sind somit modular montierbar und können in einfacher Weise ohne weitere Einstellungen der Kegelrollenlager zum erfindungsgemäßen Planetengetriebe kombiniert werden. Ein aufwändiges Einstellen der Kegelrollenlager im während der Endmontage des Planetengetriebes, wie im Stand der Technik, ist dadurch entbehrlich, so dass die Herstellung des beanspruchten Planetengetriebes vereinfacht ist

Ferner kann im erfindungsgemäßen Planetengetriebe die erste und/oder zweite Getriebestufe jeweils als Übersetzungsstufe ausgebildet sein. Unter einer Übersetzungsstufe ist dabei eine Getriebestufe zu verstehen, bei der die Ausgangsdrehzahl höher ist als die Eingangsdrehzahl. Bei der ersten Getriebestufe dient hierbei die erste Welle als Antriebswelle, und bei der zweiten Getriebestufe die erste Sonnenwelle als Antriebswelle. Bei einer derartigen Auslegung des erfindungsgemäßen Planetengetriebes werden die oben skizzierten technischen Vorteile in besonders hohem Maße erzielt. Alternativ oder ergänzend kann im erfindungsgemäßen Planetengetriebe die erste und/oder zweite Getriebestufe jeweils auch als Untersetzungsstufen ausgebildet sein. Unter einer Untersetzungsstufe ist dabei eine Getriebestufe zu verstehen, bei der die Ausgangsdrehzahl niedriger ist als die Eingangsdrehzahl.

Weiter bevorzugt ist im montierten Zustand des erfindungsgemäßen Planetengetriebes zwischen dem ersten und dem zweiten Planetenträger ein im Wesentlichen ringförmiger Zwischenraum ausgebildet. Das Gehäuse, das den Zwischenraum umgibt, ist dabei im Bereich des Zwischenraums frei von einer Lageraufnahme ausgebildet. Dies erlaubt im Wesentlichen, dass die erste und zweite Getriebestufe an ihrem axial inneren Ende im Wesentlich offen ausgebildet sind. Ein verzweigter Gehäusequerschnitt, der zur Aufnahme eines Lagers im Zwischenraum zwischen dem ersten und zweiten Planetenträger ausgebildet ist, ist folglich entbehrlich. Infolge dessen wird die Fertigung des Gehäuses vereinfacht und kosteneffizienter. Die erste und/oder zweite Getriebestufe ist durch ihren einseitig offenen Aufbau leicht zugänglich, und somit wartungsfreundlich. Auch hierdurch wird die Modularität des beanspruchten Planetengetriebes weiter gesteigert.

Weiter bevorzugt ist das Gehäuse im Bereich des Zwischenraums zwischen dem ersten und dem zweite Planetenträger demontierbar ausgebildet. Dazu kann das Gehäuse im Bereich des Zwischenraums mit einem lösbaren Verbindungselement, beispielsweise einem Flansch, ausgestattet sein. Die Verbindungselemente an der Wandung des Gehäuses der ersten und/oder zweiten Getriebestufe sind dabei vorzugsweise über Verbindungsmittel, wie beispielsweise Bolzen oder Schrauben, aneinander befestigbar. Durch die Verbindungselemente an der Wandung des Gehäuses an den jeweiligen Getriebestufen wird die Modularität des erfindungsgemäßen Planetengetriebes weiter gesteigert. Alternativ oder ergänzend können die erste und zweite Getriebestufe auch über eine Stiftverbindung aneinander montiert sein.

In einer weiteren bevorzugten Ausführungsform der Erfindung ist zwischen dem ersten Planetenträger und dem Gehäuse ein Anlauflager angeordnet. Bei einer bestimmungsgemäßen Ausrichtung des ersten Planetenträgers sind das Anlauflager und der erste Planetenträger berührungsfrei. Das Anlauflager verhindert eine übermäßige radiale Auslenkung des ersten Planetenträgers so dass das Anlaufen des Planetengetriebes stets bei einer maximal hinnehmbaren Schrägstellung des ersten Planetenträgers erfolgt.

Darüber hinaus kann im erfindungsgemäßen Planetengetriebe zwischen der ersten Sonnenwelle und dem zweiten Planetenträger eine Kurzverzahnung ausgebildet werden, die eine Drehmomentübertragung von der ersten Sonnenwelle auf dem zweiten Planetenträger gewährleistet. Die skizzierte Aufgabenstellung wird gleichermaßen von einem erfindungsgemäßen Antriebsstrang für eine Windenergieanlage gelöst, der ein erstes und optional ein zweiten Rotorwellenhauptlager und eine Rotorwelle umfasst, die drehmomentübertragend mit einem Generator verbunden ist, und den Generator selbst. Die drehmomentübertragende Kopplung zwischen der Rotorwelle und dem Generator erfolgt über ein Planetengetriebe. Erfindungsgemäß ist das Planetengetriebe nach einer der oben skizzierten Ausführungsformen ausgebildet.

Ferner wird die Aufgabenstellung auch von einer Windenergieanlage gelöst, die einen Rotor umfasst, der mit einer Rotorwelle verbunden ist und an einer Gondel befestigt ist. Der Rotor ist dabei drehmomentübertragend mit einem erfindungsgemäßen Antriebsstrang verbunden.

Die Erfindung wird im Folgenden anhand einzelner Ausführungsformen beschrieben. Die Merkmale der einzelnen Ausführungsformen sind dabei untereinander kombinierbar. Es zeigt im Einzelnen:
- FIG 1: eine erste Ausführungsform des erfindungsgemäßen Planetengetriebes im Querschnitt;
- FIG 2: einen zweite Ausführungsform des erfindungsgemäßen Planetengetriebes im Querschnitt;
- FIG 3: eine dritte Ausführungsform des erfindungsgemäßen Planetengetriebes im Querschnitt;
- FIG 4: eine Montage einer vierten Ausführungsform des erfindungsgemäßen Planetengetriebes;
- FIG 5: eine Ausführungsform einer erfindungsgemäßen Windenergieanlage mit einem erfindungsgemäßen Antriebsstrang.

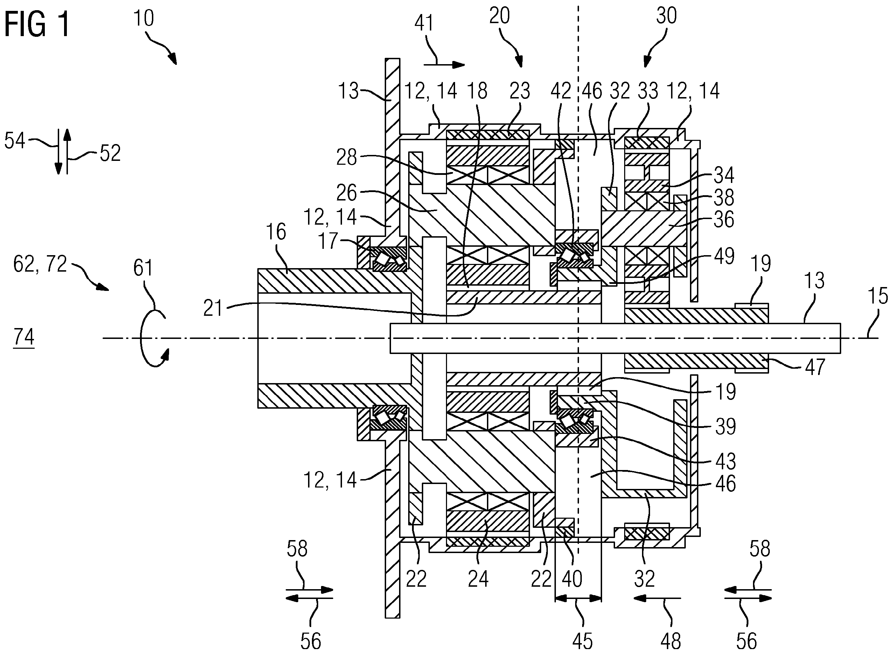

FIG 1 zeigt schematisch den Querschnitt einer ersten Ausführungsform des erfindungsgemäßen Planetengetriebes 10. Das Planetengetriebe 10 weist eine erste Getriebestufe 20 und eine zweite Getriebestufe 30 auf, die jeweils über ein erstes Hohlrad 23 bzw. ein zweites Hohlrad 33 verfügen. Im ersten Hohlrad 23 der ersten Planetenstufe 20 sind erste Planetenräder 24 aufgenommen, die wiederum jeweils an ersten Planetenradlagern 28 auf einer ersten Planetenradachse 26 drehbar gelagert sind. Dabei sind die ersten Planetenräder 24 und ihre Planetenradachsen 26 in einem ersten Planetenträger 22 aufgenommen, der um eine Drehachse 15 des Planetengetriebes 10 drehbar ist. Der erste Planetenträger 22 ist einstückig mit einer ersten Welle 26 ausgebildet, die in einem Lager 17 drehbar aufgenommen ist. Hierdurch ist der erste Planetenträger 22 einseitig gelagert. Das Lager 17, in dem die erste Welle 16 aufgenommen ist, ist an einer Wandung 14 eines Gehäuses 12 des Planetengetriebes 10 befestigt und dazu ausgebildet, Radialbeanspruchungen und Axialbeanspruchungen aufzunehmen. Das Gehäuse 12 des Planetengetriebes 10 ist in Differentialbauweise ausgebildet und umfasst Wandungen 14 der ersten und zweiten Getriebestufe 20, 30 sowie die zugehörigen Hohlräder 23, 33. Die erste Getriebestufe 20 verfügt über Drehmomentstützen 13 zur Verbindung mit einer nicht näher dargestellten Gondel 74. Die erste Welle 16 dient dabei als Antriebswelle und ist mit einer nicht näher dargestellten Rotorwelle 62 verbunden, die von einem nicht näher dargestellten Rotor 72 angetrieben wird. Über die Rotorwelle 62 wird auf die erste Welle 16 eine Antriebsleistung 61 übertragen, die über den ersten Planetenträger 22 und die ersten Planetenräder 24 eine erste Sonnenwelle 24 erreicht, die im Wesentlichen mittig im Planetengetriebe 10 aufgenommen ist.

Die erste Sonnenwelle 21 ist dabei um die Drehachse 15 des Planetengetriebes 10 drehbar. Zwischen der ersten Sonnenwelle 21 und den ersten Planetenrädern 24 ist eine Schrägverzahnung 18 ausgebildet, durch die im Betrieb des Planetengetriebes 10 eine Axialkraft 41 in Richtung des zweiten Planetenträgers ausgeübt wird. Dabei ist die Axialkraft 41 axial nach innen gerichtet. Eine axial äußere Richtung ist in FIG 1 durch die Pfeile mit den Bezugszeichen 56 dargestellt. Entsprechend ist eine axial innere Richtung durch Pfeile mit dem Bezugszeichen 58 abgebildet. Des Weiteren ist an der Wandung 14 des Gehäuses 12 ein Anlauflager 40 angeordnet, das in einer radialen Richtung dem ersten Planetenträger 22 gegenüberliegt. Die Radialrichtung ist in FIG 1 auf die Drehachse 15 bezogen. Eine radial äußere Richtung ist dabei durch den Pfeil mit dem Bezugszeichen 52 dargestellt eine radial innere Richtung ist durch den Pfeil mit dem Bezugszeichen 54 abgebildet.

Der erste Planetenträger 24 weist an einem axial innenliegenden Ende einen Lagervorsprung 43 auf, in dem ein axial inneres Lager 42 aufgenommen ist. Dabei ist das axial innere Lager 42 als zweireihiges Kegelrollenlager ausgebildet. Im axial inneren Lager 42 wiederum ist ein Axialfortsatz 39 aufgenommen, der einstückig mit dem zweiten Planetenträger 32 ausgebildet ist. Im zweiten Planetenträger 32 ist ein zweites Planetenrad 34 auf einem zweiten Planetenradlager 38 drehbar auf einer zweiten Planetenradachse 36 aufgenommen. Der zweite Planetenträger ist somit an einem axial inneren Ende über das axial innere Lager 42 unmittelbar am ersten Planetenträger 22 gelagert. Die von der ersten Sonnenwelle 21 übertragene Antriebsleistung 61 erreicht in der zweiten Getriebestufe 30 über den zweiten Planetenträger 32 und das zweite Planetenrad 35 eine zweite Sonnenwelle 47. Zur Übertragung des Drehmoments von der ersten Sonnenwelle 21 auf den zweiten Planetenträger 32 ist zwischen dieser einen Kurzverzahnung 19 ausgebildet. Durch die Lagerung des zweiten Planetenträgers 32 im ersten Planetenträger 22 ergibt sich zwischen diesem ein im Wesentlichen ringförmiger Zwischenraum 46. Der ringförmige Zwischenraum wird dabei im Wesentlichen von der Wandung 14 des Gehäuses 12, dem Lagervorsprung 43, und den Planetenträgern 26,32 begrenzt. In einem Bereich 45 des Zwischenraums 46 ist das Gehäuse 12 frei von einem verzweigten Querschnitt, der sich nach innen erstreckt. Infolgedessen ist der Zwischenraum 46 im Wesentlichen als lichter Raum ausgebildet.

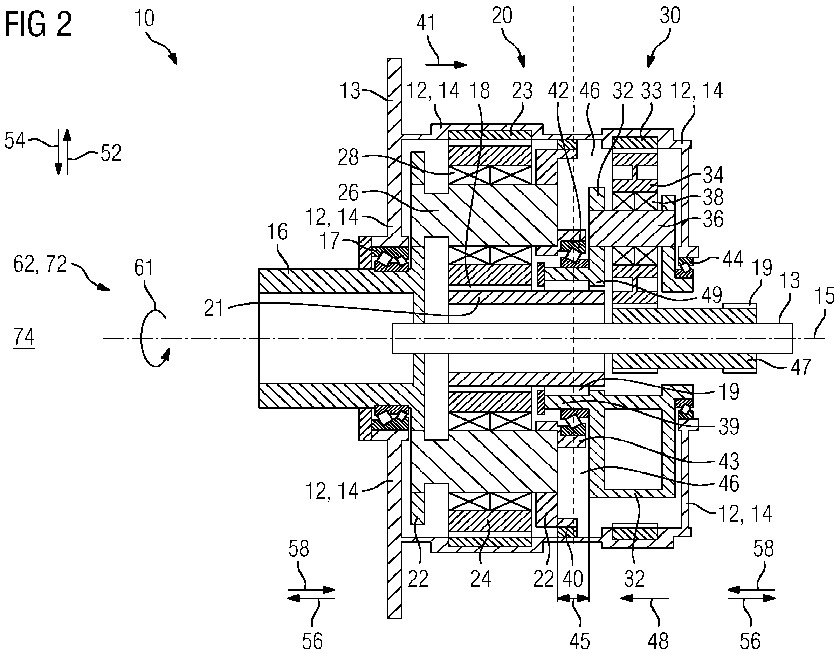

FIG 2 zeigt schematisch den Querschnitt einer zweiten Ausführungsform des erfindungsgemäßen Planetengetriebes 10. Das Planetengetriebe 10 weist eine erste Getriebestufe 20 und eine zweite Getriebestufe 30 auf, die jeweils über ein erstes Hohlrad 23 bzw. ein zweites Hohlrad 33 verfügen. Im ersten Hohlrad 23 der ersten Planetenstufe 20 sind erste Planetenräder 24 aufgenommen, die wiederum jeweils in ersten Planetenradlagern 28 auf einer ersten Planetenradachse 26 drehbar gelagert sind. Dabei sind die ersten Planetenräder 24 und ihre Planetenradachsen 26 an einem ersten Planetenträger 22 aufgenommen, der um eine Drehachse 15 des Planetengetriebes 10 drehbar ist. Der erste Planetenträger 22 ist einstückig mit einer ersten Welle 26 ausgebildet, die in einem Lager 17 drehbar aufgenommen ist. Hierdurch ist der erste Planetenträger 22 einseitig gelagert. Das Lager 17, in dem die erste Welle 16 aufgenommen ist, ist an einer Wandung 14 eines Gehäuses 12 des Planetengetriebes 10 befestigt und dazu ausgebildet, Radialbeanspruchungen und Axialbeanspruchungen aufzunehmen. Das Gehäuse 12 des Planetengetriebes 10 ist in Differentialbauweise ausgebildet und umfasst Wandungen 14 der ersten und zweiten Getriebestufe 20, 30 sowie die zugehörigen Hohlräder 23, 33. Die erste Getriebestufe 20 verfügt über Drehmomentstützen 13 zur Verbindung mit einer nicht näher dargestellten Gondel 74. Die erste Welle 16 dient dabei als Antriebswelle und ist mit einer nicht näher dargestellten Rotorwelle 62 verbunden, die von einem nicht näher dargestellten Rotor 72 angetrieben wird. Über die Rotorwelle 62 wird auf die erste Welle 16 eine Antriebsleistung 61 übertragen, die über den ersten Planetenträger 22 und die ersten Planetenräder 24 eine erste Sonnenwelle 24 erreicht, die im Wesentlichen mittig im Planetengetriebe 10 aufgenommen ist.

Die erste Sonnenwelle 21 ist dabei um die Drehachse 15 des Planetengetriebes 10 drehbar. Zwischen der ersten Sonnenwelle 21 und den ersten Planetenrädern 24 ist eine Schrägverzahnung 18 ausgebildet, durch die im Betrieb des Planetengetriebes 10 eine Axialkraft 41 in Richtung des zweiten Planetenträgers ausgeübt wird. Dabei ist die Axialkraft 41 axial nach innen gerichtet. Eine axial äußere Richtung ist in FIG 2 durch die Pfeile mit den Bezugszeichen 56 dargestellt. Entsprechend ist eine axial innere Richtung durch Pfeile mit dem Bezugszeichen 58 abgebildet. Des Weiteren ist an der Wandung 14 des Gehäuses 12 ein Anlauflager 40 angeordnet, das in einer radialen Richtung dem ersten Planetenträger 22 gegenüberliegt. Die Radialrichtung ist in FIG 2 auf die Drehachse 15 bezogen. Eine radial äußere Richtung ist dabei durch den Pfeil mit dem Bezugszeichen 52 dargestellt eine radial innere Richtung ist durch den Pfeil mit dem Bezugszeichen 54 abgebildet.

Der erste Planetenträger 24 weist an einem axial innenliegenden Ende einen Lagervorsprung 43 auf, in dem ein axial inneres Lager 42 aufgenommen ist. Dabei ist das axial innere Lager 42 als zweireihiges Kegelrollenlager ausgebildet. Im axial inneren Lager 42 wiederum ist ein Axialfortsatz 39 aufgenommen, der einstückig mit dem zweiten Planetenträger 32 ausgebildet ist. Im zweiten Planetenträger 32 ist ein zweites Planetenrad 34 auf einem zweiten Planetenradlager 38 drehbar auf einer zweiten Planetenradachse 36 aufgenommen. Der zweite Planetenträger ist somit an einem axial inneren Ende über das axial innere Lager 42 unmittelbar am ersten Planetenträger 22 gelagert. Darüber hinaus ist der zweite Planetenträger 32 auf einer dem ersten Planetenträger 22 abgewandten Seite in einem axial äußeren Lager 44 drehbar aufgenommen. Der zweite Planetenträger 32 ist folglich beidseitig gelagert und erzielt ein hohes Maß an Ausrichtungsgenauigkeit. Ferner werden Radiallasten, die auf den zweiten Planetenträger einwirken, im Wesentlichen gleichmäßig auf das axial innere Lager 42 und das axial äußere Lager 44 verteilt. Dementsprechend sind das axial innere und das axial äußere Lager 42, 44 kleiner dimensioniert.

Die von der ersten Sonnenwelle 21 übertragene Antriebsleistung 61 erreicht in der zweiten Getriebestufe 30 über den zweiten Planetenträger 32 und das zweite Planetenrad 35 eine zweite Sonnenwelle 47. Zur Übertragung des Drehmoments von der ersten Sonnenwelle 21 auf den zweiten Planetenträger 32 ist zwischen dieser einen Kurzverzahnung 19 ausgebildet. Durch die Lagerung des zweiten Planetenträgers 32 im ersten Planetenträger 22 ergibt sich zwischen diesem ein im Wesentlichen ringförmiger Zwischenraum 46. Der ringförmige Zwischenraum wird dabei im Wesentlichen von der Wandung 14 des Gehäuses 12, dem Lagervorsprung 43, und den Planetenträgern 26,32 begrenzt. In einem Bereich 45 des Zwischenraums 46 ist das Gehäuse 12 frei von einem verzweigten Querschnitt, der sich nach innen erstreckt. Infolgedessen ist der Zwischenraum 46 im Wesentlichen als lichter Raum ausgebildet.

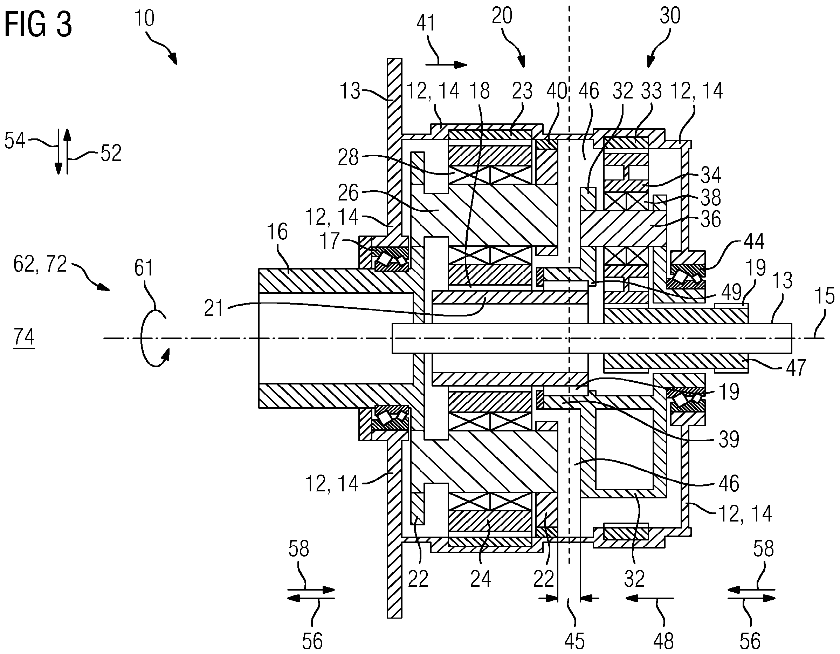

FIG 3 zeigt schematisch den Querschnitt einer dritten Ausführungsform des erfindungsgemäßen Planetengetriebes 10. Das Planetengetriebe 10 weist eine erste Getriebestufe 20 und eine zweite Getriebestufe 30 auf, die jeweils über ein erstes Hohlrad 23 bzw. ein zweites Hohlrad 33 verfügen. Im ersten Hohlrad 23 der ersten Planetenstufe 20 sind erste Planetenräder 24 aufgenommen, die wiederum jeweils in ersten Planetenradlagern 28 auf einer ersten Planetenradachse 26 drehbar gelagert sind. Dabei sind die ersten Planetenräder 24 und ihre Planetenradachsen 26 in einem ersten Planetenträger 22 aufgenommen, der um eine Drehachse 15 des Planetengetriebes 10 drehbar ist. Der erste Planetenträger 22 ist einstückig mit einer ersten Welle 26 ausgebildet, die in einem Lager 17 drehbar aufgenommen ist. Hierdurch ist der erste Planetenträger 22 einseitig gelagert. Das Lager 17, in dem die erste Welle 16 aufgenommen ist, ist an einer Wandung 14 eines Gehäuses 12 des Planetengetriebes 10 befestigt und dazu ausgebildet, Radialbeanspruchungen und Axialbeanspruchungen aufzunehmen. Das Gehäuse 12 des Planetengetriebes 10 ist in Differentialbauweise ausgebildet und umfasst Wandungen 14 der ersten und zweiten Getriebestufe 20, 30 sowie die zugehörigen Hohlräder 23, 33. Die erste Getriebestufe 20 verfügt über Drehmomentstützen 13 zur Verbindung mit einer nicht näher dargestellten Gondel 74. Die erste Welle 16 dient dabei als Antriebswelle und ist mit einer nicht näher dargestellten Rotorwelle 62 verbunden, die von einem nicht näher dargestellten Rotor 72 Angetrieben wird. Über die Rotorwelle 62 wird auf die erste Welle 16 eine Antriebsleistung 61 übertragen, die über den ersten Planetenträger 22 und die ersten Planetenräder 24 eine erste Sonnenwelle 24 erreicht, die im Wesentlichen mittig im Planetengetriebe 10 aufgenommen ist.

Die erste Sonnenwelle 21 ist dabei um die Drehachse 15 des Planetengetriebes 10 drehbar. Zwischen der ersten Sonnenwelle 21 und den ersten Planetenrädern 24 ist eine Schrägverzahnung 18 ausgebildet, durch die im Betrieb des Planetengetriebes 10 eine Axialkraft 41 in Richtung des zweiten Planetenträgers ausgeübt wird. Dabei ist die Axialkraft 41 axial nach innen gerichtet. Eine axial äußere Richtung ist in FIG 3 durch die Pfeile mit den Bezugszeichen 56 dargestellt. Entsprechend ist eine axial innere Richtung durch Pfeile mit dem Bezugszeichen 58 abgebildet. Des Weiteren ist an der Wandung 14 des Gehäuses 12 ein Anlauflager 40 angeordnet, das in einer radialen Richtung dem ersten Planetenträger 22 gegenüberliegt. Die Radialrichtung ist in FIG 3 auf die Drehachse 15 bezogen. Eine radial äußere Richtung ist dabei durch den Pfeil mit dem Bezugszeichen 52 dargestellt eine radial innere Richtung ist durch den Pfeil mit dem Bezugszeichen 54 abgebildet.

Darüber hinaus ist der zweite Planetenträger 32 auf einer dem ersten Planetenträger 22 abgewandten Seite in einem axial äußeren Lager 44 drehbar aufgenommen. Der zweite Planetenträger 32 ist folglich einseitig gelagert, dass das Planetengetriebe 10 mit einem Minimum an Bauteilen auskommt. Durch die einseitige Lagerung des ersten und zweiten Planetenträgers 22, 32 wird in einem axial inneren Bereich, in dem die Kurzverzahnung 19 an der ersten Sonnenwelle 21 in den zweiten Planetenträger 32 eingreift, ein maximales Spiel in Radialrichtung erzielt. Hierdurch wird die für den Zusammenbau der ersten und zweiten Getriebestufe 20, 30 erforderliche Ausrichtungspräzision reduziert und somit die Montage des Planetengetriebes 10 vereinfacht.

Die von der ersten Sonnenwelle 21 übertragene Antriebsleistung 61 erreicht in der zweiten Getriebestufe 30 über den zweiten Planetenträger 32 und das zweite Planetenrad 35 eine zweite Sonnenwelle 47. Zur Übertragung des Drehmoments von der ersten Sonnenwelle 21 auf den zweiten Planetenträger 32 ist zwischen dieser einen Kurzverzahnung 19 ausgebildet. Durch die Lagerung des zweiten Planetenträgers 32 im ersten Planetenträger 22 ergibt sich zwischen diesem ein im Wesentlichen ringförmiger Zwischenraum 46. Der ringförmige Zwischenraum wird dabei im Wesentlichen von der Wandung 14 des Gehäuses 12, dem Lagervorsprung 43, und den Planetenträgern 26,32 begrenzt. In einem Bereich 45 des Zwischenraums 46 ist das Gehäuse 12 frei von einem verzweigten Querschnitt, der sich nach innen erstreckt. Infolgedessen ist der Zwischenraum 46 im Wesentlichen als lichter Raum ausgebildet.

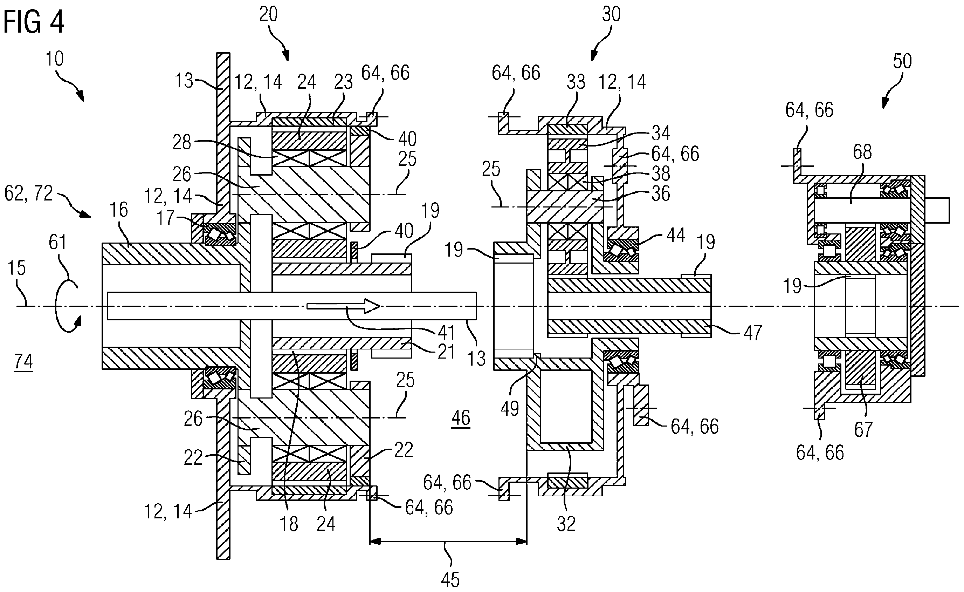

In FIG 4 ist eine Montage einer vierten Ausführungsform des erfindungsgemäßen Planetengetriebes 10 dargestellt. Das Planetengetriebe 10 umfasst eine erste Getriebestufe 20, die in einem Gehäuse 12 aufgenommen ist. In einer Wandung 14 des Gehäuses 12 ist eine Öffnung vorgesehen, durch die sich eine erste Welle 16 erstreckt, die in einem Lager 17 aufgenommen ist. Das Lager 17 ist dabei an der Wandung 14 des Gehäuses 12 befestigt und im vormontierten Zustand der ersten Getriebestufe 20 separat vorgespannt, also eingestellt. Ferner ist das Lager 17 dazu ausgebildet, Radialbelastungen und Axialbelastungen aufzunehmen. Das Gehäuse 12 des Planetengetriebes 10 ist in Differentialbauweise ausgebildet und umfasst Wandungen 14 der ersten und zweiten Getriebestufe 20, 30 sowie die zugehörigen Hohlräder 23, 33. Die erste Getriebestufe 20 verfügt über Drehmomentstützen 13 zur Verbindung mit einer nicht näher dargestellten Gondel 74.

Die erste Welle 16 ist mit einer nicht näher dargestellten Rotorwelle 62 gekoppelt, die für das Planetengetriebe 10 die Antriebsseite bildet. Die Rotorwelle 62 ist dabei mit einem nicht näher dargestellten Rotor 72 gekoppelt. Ein erster Planetenträger 22 ist einstückig mit der ersten Welle 16 ausgebildet, so dass eine über die erste Welle 16 transportierte Antriebsleistung 61 eine Drehung des ersten Planetenträger 22 um eine gemeinsame Drehachse 15 hervorruft. Im ersten Planetenträger 22 sind mehrere erste Planetenräder 24 aufgenommen, die wiederum mit ersten Planetenradlagern 28 auf ersten Planetenradachsen 26 gelagert sind. Die ersten Planetenräder 26 sind jeweils um eine Planetenradachse 25 drehbar. Die ersten Planetenräder 26 greifen in eine Verzahnung an einem ersten Hohlrad 23 ein, das mit der Wandung 14 des Gehäuses 12 verbunden ist. Mittig im ersten Planetenrad 22 ist eine erste Sonnenwelle 21 aufgenommen. Zwischen der ersten Sonnenwelle 21 und den ersten Planetenrädern 24 liegt eine Schrägverzahnung 18 vor, die beim Betrieb der ersten Getriebestufe 20 auf die erste Sonnenwelle 21 eine Axialkraft 41 in Richtung eines zweiten Planetenträgers 32 ausübt. Die erste Sonnenwelle 21 ist an einem dem ersten Planetenträger 22 abgewandten Ende mit einer Kurzverzahnung 19 versehen, die im montierten Zustand des Planetengetriebes 10 eine Übertragung von Wellenleistung an das zweite Planetenrad 32 erlaubt. Ferner ist an der Wandung 14 des Gehäuses 12 ein Anlauflager 40 angeordnet, das dazu ausgebildet ist, eine radiale Auslenkung des ersten Planetenträgers 22 zu begrenzen.

Das Gehäuse 12 der ersten Getriebestufe 20 ist einem der zweiten Getriebestufe 30 zugewandten Ende im Wesentlichen offen ausgebildet. Am Rand des Gehäuses 12, der der zweiten Getriebestufe 30 zugewandt ist, ist die Wandung 14 mit einem Befestigungselement 64 versehen, das als Flansch ausgebildet ist. Das Befestigungselement 64 ist dazu ausgebildet, mit einem Befestigungsmittel 66 zusammenzuwirken, das als Bolzen ausgebildet ist. Korrespondierend zum Verbindungselement 64 am Gehäuse 12 der ersten Getriebestufe 20 weist die Wandung 14 des Gehäuses 12 der zweiten Getriebestufe 30 auch ein Verbindungselement 64 auf. Das Verbindungselement 64 an der zweiten Getriebestufe 30 ist dazu ausgebildet, mit dem Befestigungsmittel 66 zusammenzuwirken, so dass die erste an der zweiten Getriebestufe 20, 30 lösbar befestigbar ist. Das Gehäuse 12 der zweiten Getriebestufe 30 ist auf der der ersten Getriebestufe 20 zugewandten Seite auch im Wesentlichen offen ausgebildet. Beim Zusammenfügen der ersten und zweiten Getriebestufen 20, 30 wird ein dazwischenliegender Zwischenraum 46 verkleinert und beim Verbinden der Gehäuse 12 an den Verbindungselementen 64 geschlossen. Der Zwischenraum 46 ist dabei im Wesentlichen ringförmig ausgebildet. Die einseitige offene Bauform der Gehäuse 12 der einzelnen Getriebestufen 20, 30 erlaubt es, den Zwischenraum 46 in einem Bereich 45, der sich im Wesentlichen zwischen den einander zugewandten Stirnseiten der Planetenträger 22, 32 erstreckt, als lichten Raum auszubilden. In diesem Bereich 45 ist das Gehäuse 12 an der ersten und zweiten Getriebestufe 20, 30 frei von Lageraufnahmen für die Planetenräder 22, 32.

Beim Zusammenfügen der ersten und zweiten Getriebestufe 20, 30 wird eine drehmomentübertragende Verbindung über die Kurzverzahnung 19 hergestellt, die zwischen der ersten Sonnenwelle 21 und einem im Wesentlichen mittigen umlaufenden Vorsprung 49 am zweiten Planetenträger 32 ausgebildet ist. Im zweiten Planetenträger 32 ist ein Planetenrad 34 gelagert, das über ein zweites Planetenradlager 38 auf einer zweiten Planetenradachse 36 gelagert ist. Das zweite Planetenrad 34 ist dabei um eine Planetenradachse 25 drehbar. Das zweite Planetenrad 34 steht im Eingriff mit einem zweiten Hohlrad 33, das mit der Wandung 14 des Gehäuses 12 verbunden ist. Das zweite Planetenrad 34 ist ferner mit einer zweiten Sonnenwelle 47 gekoppelt, so dass im Betrieb Wellenleistung von der ersten Sonnenwelle 21 über den zweiten Planetenträger 32, das zweite Planetenrad 34 und das zweite Hohlrad 33 auf die zweite Sonnenwelle 47 übertragen wird. Der zweite Planetenträger 32 ist dabei auf einer dem ersten Planetenträger 22 abgewandten Seite in einem axial äußeren Lager 44 drehbar aufgenommen. Das axial äußere Lager 44 ist dabei an der Wandung 14 des Gehäuses 12 der zweiten Getriebestufe 30 befestigt. Hierdurch wird eine einseitige Lagerung des zweiten Planetenträgers 32 erzielt, durch der zweite Planetenträger 32 beim Zusammenfügen mit der ersten Getriebestufe 20 im Bereich 45 des Zwischenraums 46 in Radialrichtung ein hohes Montagespiel aufweist. Gleichermaßen weist der erste Planetenträger 22 ein maximales Montagespiel im Bereich 45 des Zwischenraums 46 auf, so dass die Montage erheblich vereinfacht wird. Im montierten Zustand stellt sich im Betrieb des Planetengetriebes 10 durch Spreizkräfte in den ersten und zweiten Planetenrädern 24, 34 eine selbsttätige Zentrierung der Planetenträger 22, 32 ein.

Das Gehäuse 12 der zweiten Getriebestufe 20 weist auch an einer der ersten Getriebestufe 20 abgewandten Seite mindestens ein Verbindungselement 64 auf, das eine lösbare Verbindung mit einem korrespondierenden Verbindungselement 64 an einer dritten Getriebestufe 50 erlaubt. Hierzu wirken die Verbindungselemente 64 an der zweiten und dritten Getriebestufe 30, 50 mit einem Verbindungsmittel 66 zusammen. Die Übertragung von Wellenleistung von der zweiten Getriebestufe 30 zur dritten Getriebestufe 50 erfolgt über eine Kurzverzahnung 19, die an einem dem zweiten Planetenträger 32 abgewandten Ende der zweiten Sonnenwelle 47 ausgebildet ist. Die Kurzverzahnung 19 an der zweiten Sonnenwelle 47 greift in eine Kurzverzahnung 19 an einem Stirnrad 67 in der dritten Getriebestufe 50 ein, das mit einer nicht näher dargestellten Verzahnung mit einer Abtriebswelle 68 zusammenwirkt.

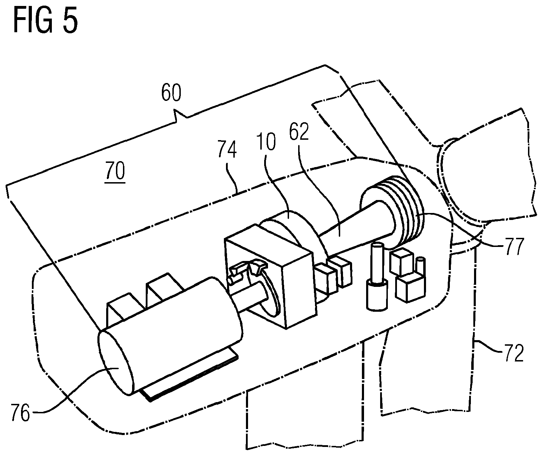

In FIG 5 ist schematisch der Aufbau einer erfindungsgemäßen Windkraftanlage 70 dargestellt, die eine Gondel 74 aufweist, an der ein Rotor 72 angebracht ist. Der Rotor 72 ist über eine Rotorwelle 62 mit einem Planetengetriebe 10 drehmomentübertragend verbunden. Die Rotorwelle 62 gehört zusammen mit dem Planetengetriebe 10, einem Generator 76 und einem Rotorwellenhauptlager 77 zu einem Antriebsstrang 60 der Windenergieanlage 70. Das Planetengetriebe 10 wiederum ist drehmomentübertragend mit einem Generator 76 verbunden, über den Elektrizität gewonnen wird.

## Patentansprüche

1. Planetengetriebe (10) mit einer ersten und einer zweiten Getriebestufe (20, 30), umfassend ein Gehäuse (12) und eine erste Welle (16), die in der ersten Getriebestufe (20) drehmomentübertragend mit einem ersten Planetenträger (22) verbunden ist, wobei die erste Welle (16) in einem Lager (17) an einer Wandung (14) des Gehäuses (12) aufgenommen ist, und die zweite Getriebestufe (30) einen zweiten Planetenträger (32) umfasst, der drehmomentübertragend mit einer Sonnenwelle (21) der ersten Getriebestufe (20) verbunden ist, **dadurch gekennzeichnet, dass** der zweite Planetenträger (32) in einem axial inneren Lager (42) aufgenommen ist, das am ersten Planetenträger (22) angeordnet ist oder im axial inneren Lager (42) und in einem axial äußeren Lager (44) aufgenommen ist, das in der Wandung (14) des Gehäuses (12) aufgenommen ist.

2. Planetengetriebe (10) mit einer ersten und einer zweiten Getriebestufe (20, 30), umfassend ein Gehäuse (12) und eine erste Welle (16), die in der ersten Getriebestufe (20) drehmomentübertragend mit einem ersten Planetenträger (22) verbunden ist, wobei die erste Welle (16) in einem Lager (17) an einer Wandung (14) des Gehäuses (12) aufgenommen ist, und die zweite Getriebestufe (30) einen zweiten Planetenträger (32) umfasst, der drehmomentübertragend mit einer Sonnenwelle (21) der ersten Getriebestufe (20) verbunden ist, wobei der zweite Planetenträger (32) in einem axial äußeren Lager (44) aufgenommen ist, das in der Wandung (14) des Gehäuses (12) aufgenommen ist, **dadurch gekennzeichnet, dass** das Gehäuse (12) in einem Bereich (45) eines Zwischenraums (46) zwischen dem ersten und dem zweiten Planetenträger (22, 32) demontierbar ausgebildet ist.

3. Planetengetriebe (10) nach Anspruch 1 oder 2, **dadurch gekennzeichnet, dass** das Lager (17), in dem die erste Welle (16) aufgenommen ist, das axial innere Lager (42) und/oder das axial äußere Lager (44) jeweils als Wälzlager oder als Gleitlager, insbesondere als Radiallager oder Axiallager, ausgebildet ist.

4. Planetengetriebe (10) nach Anspruch 3, **dadurch gekennzeichnet, dass** das als Kegelrollenlager ausgebildete Lager (17) der ersten Welle (16) und/oder das axial äußere Lager (44) jeweils in einem vormontierten Zustand der ersten und/oder zweiten Getriebestufe (20, 30) vorgespannt sind.

5. Planetengetriebe (10) nach einem der Ansprüche 1 bis 4, **dadurch gekennzeichnet, dass** die erste Welle (16) als Antriebswelle ausgebildet ist.

6. Planetengetriebe (10) nach einem der Ansprüche 1 bis 5, **dadurch gekennzeichnet, dass** die erste und/oder zweite Getriebestufe (20, 30) als Übersetzungsstufen ausgebildet sind.

7. Planetengetriebe (10) nach einem der Ansprüche 1 bis 6, **dadurch gekennzeichnet, dass** das Gehäuse (12) in einem Bereich (45) eines Zwischenraums (46) zwischen der dem ersten und dem und dem zweiten Planetenträger (22, 32) frei von einer Lageraufnahme ausgebildet ist.

8. Planetengetriebe (10) nach einem der Ansprüche 1 oder Anspruch 3 bis 7, **dadurch gekennzeichnet, dass** das Gehäuse (12) im Bereich (45) des Zwischenraums (46) zwischen dem ersten und zweiten Planetenträger (22, 32) demontierbar ausgebildet ist.

9. Planetengetriebe (10) nach einem der Ansprüche 1 bis 8, **dadurch gekennzeichnet, dass** zwischen dem ersten Planetenträger (22) und dem Gehäuse (12) ein Anlauflager (40) angeordnet ist.

10. Planetengetriebe (10) nach einem der Ansprüche 1 bis 9, **dadurch gekennzeichnet, dass** zwischen der Sonnenwelle (28) und dem zweiten Planetenträger (32) eine Kurzverzahnung (19) ausgebildet ist.

11. Planetengetriebe (10) nach einem der Ansprüche 1 bis 10, **dadurch gekennzeichnet, dass** mindestens ein Planetenradlager (28, 38) des ersten und/oder zweiten Planetenträgers (22, 32) als Gleitlager ausgebildet ist.

12. Antriebsstrang (60) für eine Windenergieanlage (70), umfassend eine Rotorwelle (62), die drehmomentübertragend über ein Planetengetriebe (10) mit einem Generator (74) verbunden ist, **dadurch gekennzeichnet, dass** das Planetengetriebe (10) nach einem der Ansprüche 1 bis 11 ausgebildet ist.

13. Windenergieanlage (70), umfassend einen Rotor (72), der an einer Gondel (74) befestigt ist und mit einem Antriebsstrang (60) nach Anspruch 12 verbunden ist.

## Claims

1. Planetary gear (10) with a first and a second gear stage (20, 30), comprising a housing (12) and a first shaft (16), which is connected in the first gear stage (20) for torque transmission to a first planet gear carrier (22), wherein the first shaft (16) is accommodated in a bearing (17) on a wall (14) of the housing (12), and the second gear stage (30) comprises a second planet gear carrier (32), which is connected for torque transmission to a sun gear shaft (21) of the first gear stage (20), **characterised in that** the second planet gear carrier (32) is accommodated in an axially inner bearing (42) which is arranged on the first planet gear carrier (22) or is accommodated in the axially inner bearing (42) and in an axially outer bearing (44), which is accommodated in the wall (14) of the housing (12).

2. Planetary gear (10) with a first and a second gear stage (20, 30), comprising a housing (12) and a first shaft (16), which is connected in the first gear stage (20) for torque transmission to a first planet gear carrier (22), wherein the first shaft (16) is accommodated in a bearing (17) on a wall (14) of the housing (12), and the second gear stage (30) comprises a second planet gear carrier (32), which is connected for torque transmission to a sun gear shaft (21) of the first gear stage (20), wherein the second planet gear carrier (32) is accommodated in an axially outer bearing (44), which is accommodated in the wall (14) of the housing (12), **characterised in that** the housing (12), in an area (45) of a space (46) between the first and the second planet gear carrier (22, 32), is embodied to allow dismantling.

3. Planetary gear (10) according to Claim 1 or 2, **characterised in that** the bearing (17), in which the first shaft (16) is accommodated, the axially inner bearing (42) and/or the axially outer bearing (44) is embodied in each case as a roller bearing or as a plain bearing, in particular as a radial bearing or as an axial bearing.

4. Planetary gear (10) according to Claim 3, **characterised in that** the bearing (17) of the first shaft (16) embodied as a ball roller bearing and/or the axially outer bearing (44) are each pre-tensioned in a pre-installed state of the first and/or second gear stage (20, 30).

5. Planetary gear (10) according to one of Claims 1 to 4, **characterised in that** the first shaft (16) is embodied as the drive shaft.

6. Planetary gear (10) according to one of Claims 1 to 5, **characterised in that** the first and/or second gear stage (20, 30) are embodied as transmission stages.

7. Planetary gear (10) according to one of Claims 1 to 6, **characterised in that** the housing (12), in an area (45) of a space (46) between the first and the second planet gear carrier (22, 32), is embodied as free from a bearing receptacle.

8. Planetary gear (10) according to one of Claim 1 or Claim 3 to 7, **characterised in that** the housing (12), in the area (45) of the space (46) between the first and second planet gear carrier (22, 32), is embodied to allow dismantling.

9. Planetary gear (10) according to one of Claims 1 to 8, **characterised in that** a thrust bearing (40) is arranged between the first planet gear carrier (22) and the housing (12).

10. Planetary gear (10) according to one of Claims 1 to 9, **characterised in that** a stub tooth section (19) is embodied between the sun gear shaft (28) and the second planet gear carrier (32).

11. Planetary gear (10) according to one of Claims 1 to 10, **characterised in that** at least one planet gear bearing (28, 38) of the first and/or second planet gear carrier (22, 32) is embodied as a plain bearing.

12. Drive train (60) for a wind energy installation (70), comprising a rotor shaft (62), which is connected for transmission of torque via a planetary gear (10) to a generator (74), **characterised in that** the planetary gear (10) is embodied according to one of Claims 1 to 11.

13. Wind energy installation (70), comprising a rotor (72), which is fastened to a gondola (74) and is connected to a drive train (60) according to Claim 12.

## Revendications

1. Engrenage (10) épicycloïdal, ayant un premier et un deuxième étages (20, 30), comprenant un carter (12) et un premier arbre (16), qui, dans le premier étage (20) de l'engrenage, est assemblé à transmission de couple à une première cage (22) de transmission, le premier arbre (16) étant reçu dans un palier (17) sur une paroi (14) du carter (12), et le deuxième étage (30) de l'engrenage comprend une deuxième cage (32) de transmission, qui est assemblée à transmission de couple à un arbre (21) solaire du premier étage (20) de l'engrenage, **caractérisé en ce que** la deuxième cage (32) de transmission est reçue dans un palier (42 ) intérieur axialement, qui est disposé sur la première cage (22 ) de transmission ou qui est reçu dans le palier (42 ) intérieur axialement et dans un palier (44 ) extérieur axialement, reçu dans la paroi (14) du carter (12).

2. Engrenage (10 ) épicycloïdal ayant un premier et un deuxième étages (20, 30), comprenant un carter (12) et un premier arbre (16), qui, dans le premier étage (20) de l'engrenage, est assemblé à transmission de couple à une première cage (22) de transmission, le premier arbre (16) étant reçu dans un palier (17) sur une paroi (14) du carter (12), et le deuxième étage (30) de l'engrenage comprend une deuxième cage (32) de transmission, qui est assemblée à transmission de couple à un arbre (21) solaire du premier étage (20) de l'engrenage, la deuxième cage (32) de transmission étant reçue dans un palier (44 ) extérieur axialement, qui est reçu dans la paroi (14) du carter (12), **caractérisé en ce que** le carter (12) est démontable dans une région (45 ) d'un espace (46) intermédiaire, entre la première et la deuxième cages (22, 32) de transmission.

3. Engrenage (10 ) épicycloïdal suivant la revendication 1 ou 2, **caractérisé en ce que** le palier (17), dans lequel le premier arbre (16) est reçu, le palier (42 ) intérieur axialement et/ou le palier (44 ) extérieur axialement sont constitués chacun en palier à roulement ou en palier lisse, notamment en palier radial ou en palier axial.

4. Engrenage (10 ) épicycloïdal suivant la revendication 3, **caractérisé en ce que** le palier (17), constitué en roulement à rouleau conique du premier arbre (16) et/ou du palier (44 ) extérieur axialement, sont chacun précontraints dans un état prémonté du premier et/ou du deuxième étage (20, 30) de l'engrenage.

5. Engrenage (10 ) épicycloïdal suivant l'une des revendications 1 à 4, **caractérisé en ce que** le premier arbre (16) est constitué en arbre menant.

6. Engrenage (10 ) épicycloïdal suivant l'une des revendication 1 à 5, **caractérisé en ce que** le premier et/ou le deuxième étages (20, 30) de l'engrenage sont constitués en étages de multiplication.

7. Engrenage (10 ) épicycloïdal suivant l'une des revendications 1 à 6, **caractérisé en ce que** le carter (2) est constitué sans logement de palier, dans une région (45 ) d'un espace (46) intermédiaire, entre la première et la deuxième cage (22, 32) de transmission.

8. Engrenage (10 ) épicycloïdal suivant l'une des revendications 1 ou 3 à 7, **caractérisé en ce que** le carter (12) est démontable dans la région (45 ) de l'espace (46) intermédiaire, entre la première et la deuxième cages (22, 32) de transmission.

9. Engrenage (10 ) épicycloïdal suivant l'une des revendications 1 à 8, **caractérisé en ce qu'**un palier (40) de mise en marche est disposé entre la première cage (22) de transmission et le carter (12).

10. Engrenage (10) épicycloïdal suivant l'une des revendications 1 à 9, **caractérisé en ce qu'**une denture (19) courte est constituée entre l'arbre (28) solaire et la deuxième cage (32) de transmission.

11. Engrenage (10 ) épicycloïdal suivant l'une des revendications 1 à 10, **caractérisé en ce qu'**au moins un palier (28, 38) de roue satellite de la première et/ou de la deuxième cage (22, 32) de transmission est constitué en palier lisse.

12. Chaîne (60) cinématique d'une éolienne (70), comprenant un arbre (62) de roue, qui est assemblé à transmission de couple à une génératrice (74) par un engrenage (10 ) épicycloïdal, **caractérisée en ce que** l'engrenage (10) épicycloïdal est constitué suivant l'une des revendications 1 à 11.

13. Eolienne (70), comprenant une roue (72), qui est fixée à une nacelle (74) et qui est reliée à une chaîne (60) cinématique suivant la revendication 12.
